Europäisches Patentamt

European Patent Office

Office européen des brevets

(11) Veröffentlichungsnummer: **0 315 860**

**A2**

## EUROPÄISCHE PATENTANMELDUNG

(21) Anmeldenummer: 88118100.2

(22) Anmeldetag: 31.10.88

(51) Int. Cl.4: **H04M 1/57**

(30) Priorität: 07.11.87 DE 3737965

(43) Veröffentlichungstag der Anmeldung:
**17.05.89 Patentblatt 89/20**

(84) Benannte Vertragsstaaten:
**AT BE CH DE ES FR GB IT LI LU NL SE**

(71) Anmelder: **Ebenhan, Wolfgang**
**Lukas-Cranach-Strasse 36**
**D-3050 Wunstorf 1(DE)**

(72) Erfinder: **Ebenhan, Wolfgang**
**Lukas-Cranach-Strasse 36**
**D-3050 Wunstorf 1(DE)**

(74) Vertreter: **Recktenwald, Albert, Dipl.-Ing.**
**Oberdorf 32 Postf. 125**
**D-5378 Blankenheim-Reetz(DE)**

(54) Anruferidentifizierung bei Fernsprecheinrichtungen.

(57) Gegenstand der Erfindung ist eine Schaltanlage zur Anrufidentifizierung, insbesondere die Erzeugung einer teilnehmeranschlußspezifischen Kennung in der Vermittlungsstelle des rufenden Teilnehmers und die Auswertung dieser Kennung beim gerufenen Teilnehmer. Die im allgemeinen zur Gebührenerfassung vorhandene Identifizierungsschaltung in der Vermittlung des Anrufers ist mit einer Schaltanlage verbunden, dieser die speziellen Anschlußdaten entnimmt und sie, gegebenenfalls erweitert um die Ortsnetzkennzahl, möglicherweise auch um die Landeskennzahl, in ein Kennungssignal umformt, das - zum angerufenen Teilnehmer mit dem oder im Anschluß an das Rufsignal weiterleitet - in einer für dieses Signal vorhandenen Empfangsanlage aufbereitet und vorzugsweise in digitaler Form angezeigt wird.

FIG.2

# ANRUFERIDENTIFIZIERUNG BEI FERNSPRECHEINRICHTUNGEN

Die Erfindung betrifft ein Verfahren zur Idenifizierung eines Anrufers durch die Fernsprecheinrichtung des angewählten Teilnehmers. Sie betrifft ferner eine Vorrichtung zur Durchführung des Verfahrens.

Es kommt immer wieder vor, daß Notrufe oder Hilferufe bei den Polizei-und Feuerwehrdienststellen usw. nicht identifiziert und geortet werden können. weil die Anrufer hilflos, nicht in der Lage zu einer verständlichen Angabe sind oder durch Fremdeinfluß daran gehindert werden. Zwar ist bei der Fernsprechverbindung über die Vermittlungsstellen eine Ortung möglich, jedoch im allgemeinen so zeitaufwendig, daß sie in wirklichen Notfällen nicht genutzt werden kann. Außerdem kommt es immer wieder zu oft recht schwerwiegenden Belästigungen und zu Verletzungen der Intimsphäre von Besitzern eines Fernsprechanschlusses, die nur in seltenen Fällen wirklich aufgeklärt werden können, weil die anonymen Anrufer mit den technischen Gegebenheiten genügend vertraut sind, um die Ermittlung zu verhindern.

Die der Erfindung zugrunde liegende technische Aufgabe besteht danach darin, eine Möglichkeit zu schaffen, um die Teilnehmernummer des Anrufers bzw. der zum Anruf benutzten Fernsprecheinrichtung an der Fernsprechanlage des Angerufenen sichtbar zu machen. Diese Aufgabe wird durch ein Verfahren zur Idenifizierung eines Anrufers durch die Fernsprecheinrichtung des angewählten Teilnehmers gelöst, das sich dadurch auszeichnet, daß die Erzeugung einer teilnehmeranschlußspezifischen Kennung in der Vermittlungsstelle des rufender Teilnehmers und die Auswertung dieser Kennung beim angerufenen Teilnehmer zur optischen Anzeige von Teilnehmerrufnummer und Ortsnetzkennzahl sowie gegebenenfalls weiteren Kennzahlen, wie Auslandskennziffern des rufenden Teil nehmers, führt. Hierzu ist vorteilhaft vorgesehen, daß in der Vermittlung des Anrufers mit der Einleitung der Fernsprechverbindung vorzugsweise unter Nutzung einer der Gebührenerfassung dienenden Identifizierungsschaltung ein der anrufenden Fernsprecheinrichtung zugeordnetes Kennungssignal erzeugt, mit dem Rufsignal an die angewählte Fernsprecheinrichtung weitergegeben und in einem mit der Empfangssteuerung der Fernsprecheinrichtung verbundenen Speicher festgehalten sowie gleichzeitig oder auf ein weiteres Signal aufbereitet und, vorzugsweise in digitaler Form, angezeigt wird.

Die erfindungsgemäße Vorrichtung zu Anrufidentifizierung des rufenden Teilnehmers durch die Fernsprecheinrichtung des angewählten Teilnehmers ist dadurch gekennzeichnet, daß mit einer der Gebührenerfassung dienenden Identifizierungsschaltung eine Einrichtung zur Erzeugung und Weitergabe eines die Kenndaten der anrufenden Fernsprecheinrichtung enthaltenden Signals und seiner Weitergabe in das Vermittlungssystem verbunden ist und die angewählte Fernsprecheinrichtung eine der Auskopplung des Kennungssignals dienende Empfangssteuerung aufweist, der eine das Kennungssignal haltende Speichereinheit ein Aufbereitsungsblock und eine Vorrichtung zur vorzugsweise digitalen Anzeige der Kennungsdaten nachgeschaltet sind.

Die Einrichtung einer zur Gebührenerfassung dienenden Identifizierungsschaltung und die Einrichtung zur Erzeugung eines die Kenndaten der anrufenden Fernsprecheinrichtung enthaltenden Signals und zu deren Weitergabe in das Vermittlungssystem sind vorzugsweise ganz oder teilweise als einer oder mehrere kundenspezifische integrierte Schaltkreise, vorzugsweise in CMOS-Technik, vorgesehen. Die der angewählten Fernsprecheinrichtung zugeordneten Vorkehrungen für die der Auskoppelung des Kennungssignals dienenden Empfangssteuerung bestehen vorteilhaft aus einer das Kennungssignal haltenden Speichereinheit, einem Aufbereitungsblock und einer Anzeigevorrichtung und sind ganz oder teilweise in einem oder mehreren kundenspezifischen integrierten Schaltkreisen, die vorzugsweise in CMOS-Technik hergestellt werden, integriert. Die Einrichtung zur Erzeugung eines die Kenndaten der anrufenden Fernsprecheinrichtung enthaltenden Signals und dessen Weitergabe in das Vermittlungssytem sowie eine bei der empfangenden Fernsprecheinrichtung der Auskopplung des Kennungssignals dienende Empfangssteuerung und ein Aufbereitungsblock sind als selbständig nach vorgegebenem Ablauf in Tätigkeit gesetzte Einheiten aufgebaut. Sie können dabei in ihrer Funktion und Arbeitsweise ganz oder teilweise durch entsprechende Programmsequenzen einer Rechnersteuerung ausgebildet werden.

Die aus einer Empfangssteuerung einer Speichereinheit, einem Aufbereitungsblock und einer Anzeigevorrichtung bestehende Wiedergabeeinheit ist vorzugsweise als Untersatz in der Fernsprecheinrichtung integriert. Die Fernsprecheinrichtung ist beispielsweise als Fernsprechapparat mit einem Telefonhörer und einem Untersatz ausgebildet, wobei der Untersatz ein optisches Anzeigefeld aufweist. Das Anzeigefeld gibt optisch die Angaben wie beispielsweise Teilnehmerrufnummer, Ortsnetzkennzahl, Auslandskennziffer sowie gegebenenfalls weitere Kenndaten des anrufenden Teilnemers wieder. Der Aufbereitsungsblock nimmt die Dekodierung der Information aus der Speichereinheit auf das Formal der Anzeigevorrichtung vor. Die Anzeigevorrichtung erfaßt in optischer Darstellung die die Rufnummereinheiten des Anrufers kennzeichnende Information. Die erfindungsgemäße Wiedergabeeinrichtung kann in den Fernsprechapparat integriert, sie kann aber auch als eigenständiges Zusatzgerät am Fernsprecher anschließbar konzipiert sein.

Vorteilhaft erhält die aus der Auskopplungseinheit, der Speichereinheit, dem Aufbereitungsblock und der Anzeigevorrichtung bestehende Empfangseinrichtung für das Kennungssignal eine eigene vom Fernsprechnetz unabhängige Energieversorgung.

Eine Realisierung der Erfindung dürfte beispielsweise durch Auswertung der zwangsläufig kundenspezifischen zur Ermittlung der Gebühreneinheiten vorhandenen Einrichtungen in jedem, mindestens in jedem automatischen Vermittlungssystem, möglich sein. Bei den zur Zeit noch zum Teil üblichen elektromechanischen Systemen ergibt sich die Installation der erfindungsgemäßen Einrichtungen allerdings als so schwierig, daß hier an eine Einführung kaum zu denken ist.

Ein Ausführungsbeispiel der Erfindung ist in der beigegebenen, der Erläuterung der Erfindung dienenden Zeichnung dargestellt.

Es zeigt:

Fig. 1: Blockschaltung mit anrufender und angerufener Anlage;

Fig. 2: Fernsprecher mit als Untersatz ausgebildeter Wiedergabeeinheit.

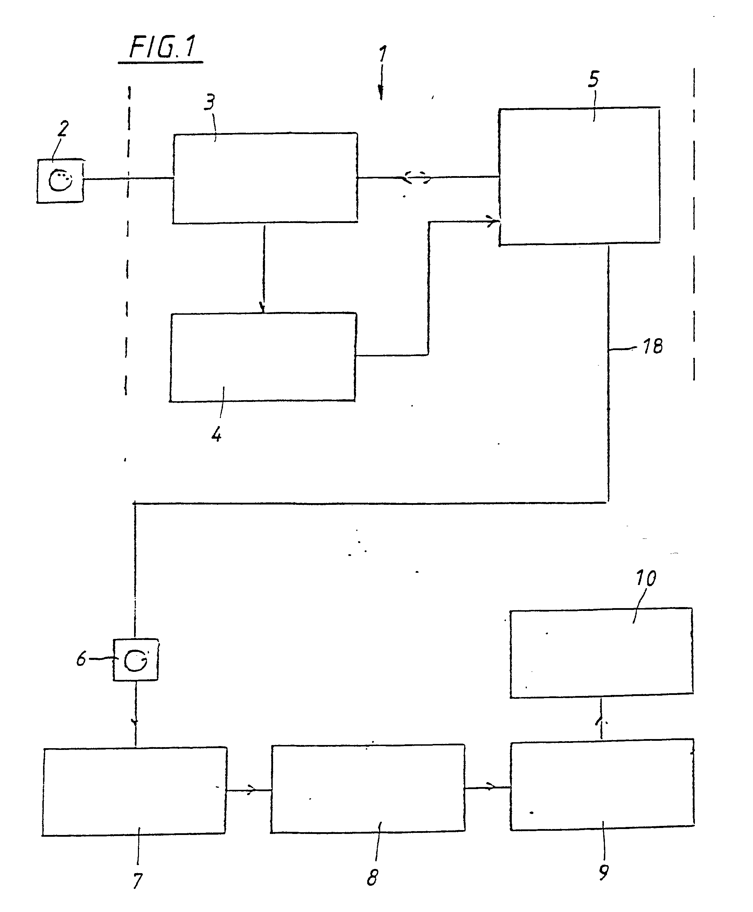

Fig. 1 zeigt das Blockschaltbild einer erfindungsgemäßen Anlage. Mit Beginn des Wählvorganes an der Fernsprecheinrichtung 2 wird in der zugeordneten Vermittlungsstelle 1 mit Hilfe der Identifizierungsschaltung 3 der wählende Teilnehmer 2 ermittelt. Mit der Identifizierungsschaltung 3 ist eine Einheit 4 verbunden, die die Teilnehmerkenndaten wie Teilnehmerrufnummer 17 und Ortskennzahl 16 sowie gegebenenfalls auch die Landeskennzahl 15 in ein Kennungssignal umformt und vorzugsweise in kodierter Form zusammen mit dem Signal oder beim Zustandekommen der Verbindung in das Vermittlungssystem 5 eingibt, von wo aus es zur Fernsprecheinrichtung 6 des angerufenen Teilnehmers gelangt, die mit einer erfindungsgemäßen Wiedergabeeinheit als Untersatz 13 ausgestattet ist.

Eine Empfangssteuerung 7 koppelt aus den ankommenden Signalen das Kennungssignal aus und gibt es an eine Speichereinheit 8 weiter, wo es für die Dauer der Sprechverbindung festgehalten wird. Mit der Speichereinheit 8 ist ein Aufbereitungsblock 9 verbunden, der das ankommende Kennungssignal aufbereitet, es gegebenenfalls dekodiert und an die Anlagevorrichtung 10 weitergibt.

Die Kopplung des vom Vermittlungssystem 5 der Anrufer-Vermittlungsstelle 1 ausgehenden und über die Leitung 18 zur angerufenen Fernsprecheinrichtung 6 gelangenden Kennungssignals an das Rufsignal kann auf verschiedene Weise geschehen. So ist es u.U. zweckmäßig, das Kennungssignal zusammen mit dem Rufsignal an den angerufenen Teilnehmer 6 weiterzugeben, wo es entweder zunächst gespeichert und erst beim Abheben des Telefonhörers 12 an den Aufbereitungsblock 9 und die Anzeigevorrichtung 10 gegebenen wird oder sofort auf der Anzeigevorrichtung 10 nach entsprechender Aufbereitung erfolgt, so daß in diesem Fall der Angerufene 6 gegebenenfalls bereits vor dem Herstellen der Verbindung durch Abheben des Telefonhörers 12 die anrufende Stelle erkennen kann.

Die Übermittlung des Kennungssignals kann aber auch bis zum Zustandekommen der Verbindung zurückgestellt und durch das Abheben aktiviert werden. Bevorzugt werden Anzeigevorrichtung 10 und Speicher 8 mit der Beendigung der Verbindung wieder gelöscht.

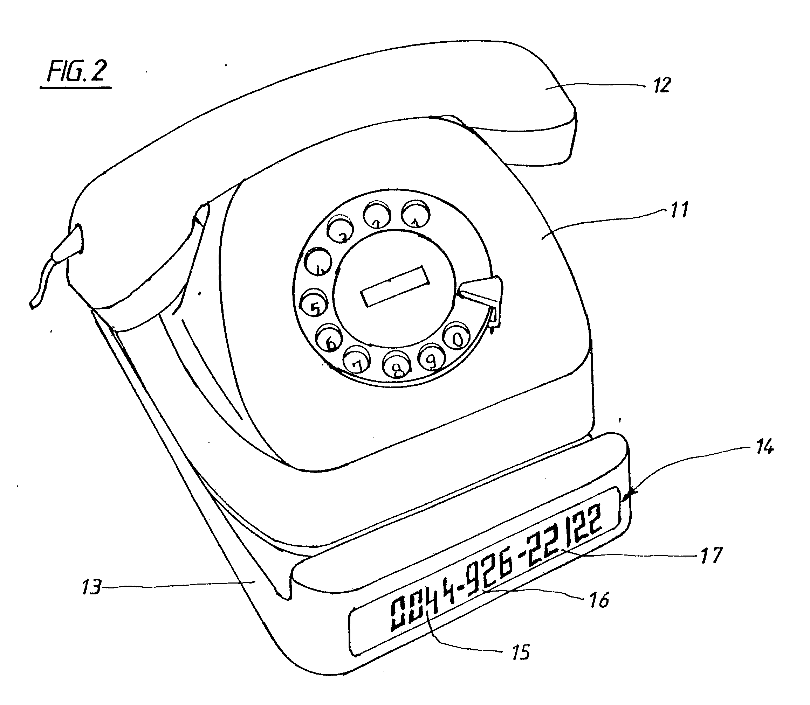

Fig. 2 zeigt einen Fernsprechapparat 11, dem eine Wiedergabeeinheit zugeordnet ist, die hier als Untersatz 13 ausgebildet wurde. An der Frontseite der Wiedergabeeinheit befindet sich das Anzeigefeld 14, das in der Darstellung nacheinander, durch einen Abstand oder einen Bindestrich getrennt, die Landeskennzahl 15, die Ortsnetzkennzahl 16 und die Teilnehmerrufnummer 17 des Teilnehmers anzeigt.

Statt- wie in Fig. 2 dargestellt- als Zusatzeinrichtung Untersatz 13 kann die Wiedergabeeinheit auch in den Fernsprechapparat 6 integriert sein. In ihrer einfachen Form zeigt sie lediglich die Rufnummer, gegebenenfalls auch die Ortskennzahl an.

## Ansprüche

1. Verfahren zur Idenifizierung eines Anrufers durch die Fernsprecheinrichtung des angewählten Teilnehmers,
dadurch gekennzeichnet,
daß durch die Erzeugung einer teilnehmeranschlußspezifischen Kennung in der Vermittlungsstelle des rufenden Teilnehmers und die Auswertung dieser Kennung beim gerufenen Teilnehmer die Rufnummer und die Ortskennzahl des anrufenden Teilnehmers sowie gegebenenfalls weiterer Kennzahlen, wie Auslandskennziffern, des rufenden Teilnehmers optisch angezeigt werden.

2. Verfahren nach Anspruch 1,
dadurch gekennzeichnet, daß
in der Vermittlungsstelle des Anrufers mit der Einleitung der Fernsprechverbindung vorzugsweise unter Nutzung einer der Gebührenerfassung dienenden Identifizierungsschaltung ein der anrufenden Fernsprecheinrichtung zugeordnetes Kennungssignal erzeugt, mit dem Rufsignal an die angewählte Fernsprecheinrichtung weitergegeben und in einem mit der Empfangssteuerung der Fernsprecheinrichtung verbundenen Speicher festgehalten sowie gleichzeitig oder auf ein weiteres Signal hin aufbereitet und, vorzugsweise in digitaler Form, angezeigt wird.

3. Verfahren nach Anspruh 1 oder 2,
dadurch gekennzeichnet, daß
die Kennung in den Pausen zwischen den Rufsignalen übermittelt wird.

4. Verfahren nach einem der Anpsprüche 1 bis 3,
dadurch gekennzeichnet, daß
die Übermittlung im Augenblick der Meldung des angerufenen Teilnehmers realisiert wird.

5. Verfahren nach einem der Ansprüche 1 bis 4,
dadurch gekennzeichnet, daß
die Übermittlung unmittelbar vor dem Rufvorgang, wenn die angewählte Fernsprecheinrichtung (6) als frei erkannt wir, vor sich geht.

6. Vorrichtung zur Identifizierung eines Anrufers durch die Fernsprecheinrichtung des angewählten Teilnehmehrs, insbesondere zur Durchführung des erfindungsgemäßen Verfahrens nach einem der Ansprüche 1 bis 5,
dadurch gekennzeichnet, daß
mit einer der Gebührenerfassung dienenden Identifizierungsschaltung (3) eine Einrichtung (4) zur Erzeugung und Weitergabe eines die Kenndaten der anrufenden Fernsprecheinrichtung (2) enthaltenden Signals und seiner Weitergabe in das Vermittlungssystem (5) verbunden ist und die angewählte Fernsprecheinrichtung (6) eine der Auskopplung des Kennungssignals dienende Empfangssteuerung (7) aufweist, der eine das Kennungssignal haltende Speichereinheit (8), ein Aufbereitsungsblock (9) und eine Vorrichtung (10) zur vorzugsweise digitalen Anzeige der Kennungsdaten nachgeschaltet sind.

7. Vorrichtung nach Anspruch 6,
dadurch gekennzeichnet, daß
die Einrichtung einer zur Gebührenerfassung dienenden Identifizierungsschaltung (3) und die Einrichtung (4) zur Erzeugung und Weitergabe eines die Kenndaten der anrufenden Fernsprecheinrichtung (2) enthaltenden Signals und seiner Weitergabe in das Vermittlungssystem (5) ganz oder teilweise in einem oder mehreren kundenspezifischen integrierten Schaltkreisen, die vorzugsweise in CMOS-Technik hergestellt werden, integriert sind, wobei die der angewählten Fernsprecheinrichtung (6) zugeordneten Einrichtungen einer der Auskopplung des Kennungssignals dienenden Empfangssteuerung (7), eine das Kennungssignal haltende Speichereinheit (8), ein Aufbereitungsblock (9) und eine Anzeigevorrichtung (10) ganz oder Teilweise in einem oder mehreren kundenspezifischen integrierten Schaltkreisen, die vorzugsweise in CMOS-Technik herges stellt werden, integriert sind.

8. Vorrichtung nach Anspruch 6 oder 7,
dadurch gekennzeichnet, daß
die Einrichtung (4) zur Erzeugung und Weitergabe in das Vermittlungssystem (5) eines die Kenndaten der anrufenden Fernsprecheinrichtung (2) enthaltenden Signals, eine bei der Fernsprecheinrichtung (6) der Auskopplung des Kennungssignals dienenden Empfangssteuerung (7) und ein Aufbereitungsblock (9) ganz oder teilweise aus aufbaubedingt selbsttätig wirksam werden.

9. Vorrichtung nach einem der Ansprüche 6 bis 8,
dadurch gekennzeichnet, daß
die aus einer Empfangssteuerung (7), einer Speichereinheit (8), einem Aufbereitungsblock (9) und einer Anzeigevorrichtung (10) bestehende Wiedergabeeinheit vorzugsweise als Untersatz (13) des eigentlichen Fernsprechers (2; 6; 11, 12) dient.

10. Vorrichtung nach einem der Ansprüche 6 bis 9,
dadurch gekennzeichnet, daß
die Fernsprecheinrichtung (2; 6) als Fernsprecher (11) mit einem Telefonhörer (12) und einem Untersatz (13) ausgebildet ist.

11. Vorrichtung nach einem der Ansprüche 6 bis 10,
dadurch gekennzeichnet, daß
der Untersatz (13) ein optisches Anzeigefeld (14) aufweist.

12. Vorrichtung nach einem der Ansprüche 6 bis 11,
dadurch gekennzeichnet, daß
das Anzeigefeld (14) Kenndaten wie Teilnehmerrufnummer (17), Ortskennzahl (16) sowie vorzugsweise auch Auslandskennziffern und gegebenenfalls weitere Kennzahlen des rufenden Teilnehmers optisch anzeigt.

13. Vorrichtung nach einem der Ansprüche 6 bis 12,
dadurch gekennzeichnet, daß
der Aufbereitungsblock (9) eine Dekodiereinrichtung zur Aufberei tung der in der Speichereinheit (8) gespeicherten Information und ihrer Ausgabe auf die Anzeigevorrichtung (10) aufweist.

14. Vorrichtung nach einem der Ansprüche 6 bis 13,
dadurch gekennzeichnet, daß
die aus der Aufbereitungseinheit (9), der Speichereinheit (8) und der Anzeigevorrichtung (10) bestehende Empfangseinrichtung für das Kennungssignal eine eigene vom Fernsprechenetz unabhängige Energieversorgung aufweist.

## FIG.1

FIG.2

12

11

14

17

16

15

13

EP 0 315 860 A2